# DEMANDE DE BREVET EUROPEEN

(11) **EP 0 544 594 A1**
(43) Date de publication de la demande: **02.06.1993**
(21) Numéro de dépôt: 92403187.5
(22) Date de dépôt: 26.11.1992
(51) Int. Cl.: H04N 1/00, H01M 2/10

(54) **Télécopieur à rouleau de papier et batterie d'alimentation autonome**

(30) Priorité: 27.11.1991 FR 9114648
(71) Demandeur: SOCIETE D'APPLICATIONS GENERALES D'ELECTRICITE ET DE MECANIQUE SAGEM, F-75783 Paris Cédex 16 (FR)
(72) Inventeur: Kuhn, Alex, F-95430 Auvers Sur Oise (FR)
(74) Mandataire: Bloch, Gérard

(57) **Abrégé**

Télécopieur à rouleau de papier alimentaire (3), enroulé sur un moyeu (4) monté rotatif sur au moins un axe, et à batterie (10) d'alimentation autonome, remarquable par le fait que la batterie (10) s'étend à l'intérieur du moyeu (4) et lui sert d'axe de rotation.

## Description

La présente invention concerne un télécopieur à rouleau de papier alimentaire et batterie d'alimentation autonome.

Un tel télécopieur, à priori thermique, c'est-à-dire à tête d'écriture thermique à éléments résistifs chauffants, est un appareil portable, dont la faiblesse de l'encombrement doit constituer un atout. Quant au rouleau de papier, il est enroulé sur un moyeu, généralement en carton et monté rotatif, à ses deux extrémités latérales, sur deux axes solidaires du châssis du télécopieur. Avec un moyeu de faible diamètre, qui n'augmente d'ailleurs pratiquement pas la longueur de papier utile, les spires de papier, près du moyeu, étant évidemment de faible circonférence, un désagrément apparaît en fin de rouleau qui est le phénomène d'enroulement naturel (curling), c'est-à-dire la tendance des feuilles de papier, après impression, découpe et éjection de l'appareil, à s'enrouler sur elles-mêmes.

La demanderesse s'est donc appuyée sur la constatation de l'inutilité de trop réduire le diamètre du moyeu de rouleau de papier, tout en cherchant à réduire l'encombrement global d'un appareil télécopieur, pour proposer son invention.

Ainsi, la présente invention concerne un télécopieur à rouleau de papier alimentaire, enroulé sur un moyeu monté rotatif sur au moins un axe, et à batterie d'alimentation autonome, caractérisé par le fait que la batterie s'étend à l'intérieur du moyeu et lui sert d'axe de rotation.

Au prix d'une augmentation minime et parfaitement tolérable du diamètre de moyeu, le télécopieur de l'invention présente un triple avantage.

La place, occupée par la batterie dans les télécopieurs de l'art antérieur, est libérée, ce qui permet une réduction de l'encombrement global, d'une première part.

La batterie, ou plus exactement le paquet-batterie (pack), sert tout naturellement d'axe unique au moyeu du rouleau de papier, de deuxième part. Les paquets-batteries étant généralement cylindriques, la solution de l'invention est optimale.

De troisième part, enfin, par la trappe de chargement du rouleau de papier on peut également accéder à la batterie si bien que la solution proposée permet l'économie d'une trappe d'accès.

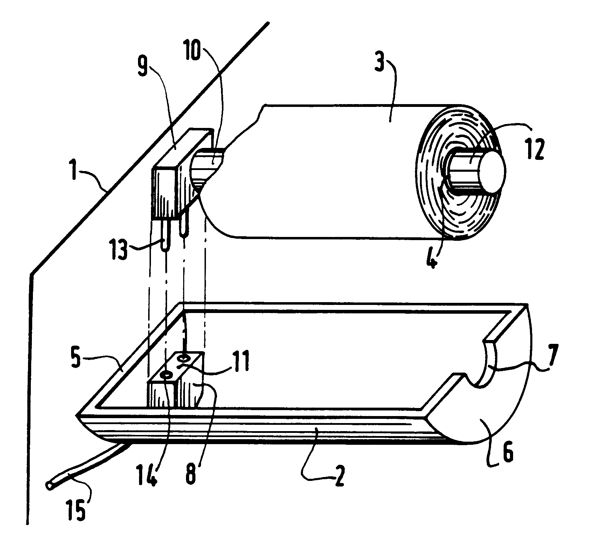

L'invention sera mieux comprise à l'aide de la description suivante de la cuvette de réception du rouleau de papier du télécopieur, avec un paquet-batterie , en référence à la figure unique ci-jointe qui les représente en perspective éclatée avec arraché.

Le télécopieur de l'invention ne se distinguant de ceux de l'art antérieur que par les éléments représentés au dessin, ses autres éléments, bien connus de l'homme de métier, ne seront pas décrits ni même évoqués.

Le télécopieur, dont on a symbolisé le châssis en 1, comporte une cuvette hémicylindrique 2, ici fixée au châssis 1, mais elle pourrait aussi, et par exemple, en être une partie intégrante, pour recevoir un rouleau de papier alimentaire, en l'occurrence thermique, 3 pour la création de documents papier à recevoir ou à copier en local. Le rouleau 3 est enroulé sur un moyeu 4 en carton.

La cuvette de réception 2 est fermée latéralement par deux flasques d'extrémité semi-circulaires 5,6, l'un d'eux, 6, comportant une échancrure 7 aussi semi-circulaire. Adjacent à la paroi intérieure de l'autre flasque 5, et en l'espèce d'une seule pièce avec la cuvette, se trouve un socle de connexion 8, ici femelle mais il aurait pu être mâle, destiné à recevoir, par un plan 11 s'étendant légèrement en-dessous du plan du fond de l'échancrure 7, un embout de connexion mâle 9 d'un paquet-batterie 10.

Le paquet-batterie 10 est cylindrique et destiné à être reçu, par son extrémité 12 opposée à l'embout 9, dans l'échancrure 7 formant berceau.

Deux bornes de connexion électrique 13 s'étendent hors de l'embout 9 pour pouvoir s'engager dans des orifices correspondants 14 du socle 8 de la cuvette 2, un câble de connexion 15 étant relié, à travers la cuvette, au socle 8.

Le montage du rouleau alimentaire 3 et de la batterie 12 s'effectue de la manière suivante.

On glisse le rouleau de papier 3 sur la batterie 10, dont le diamètre extérieur est légèrement plus petit que le diamètre intérieur du moyeu 4 du rouleau, par l'extrémité 12 du paquet-batterie jusqu'à ce que le rouleau de papier vienne en butée contre l'embout 9, ici parallélépipédique. On introduit ensuite l'ensemble batterie - rouleau dans la cuvette 2, en engageant les bornes 13 dans les orifices 14 et jusqu'à ce que l'embout 9 s'appuie sur le socle 8 et l'extrémité de batterie 12 repose sur le fond de l'échancrure 7, la largeur du rouleau de papier 3 étant sensiblement inférieure à la distance séparant le socle 8 du flasque 6. Alors, le rouleau de papier 3 peut être entraîné en rotation autour du paquet-batterie 10.

## Revendications

1. Télécopieur à rouleau de papier alimentaire (3), enroulé sur un moyeu (4) monté rotatif sur au moins un axe, et à batterie (10) d'alimentation autonome, caractérisé par le fait que la batterie (10) s'étend à l'intérieur du moyeu (4) et lui sert d'axe de rotation.

2. Télécopieur selon la revendication 1, dans lequel la batterie (10) comporte un embout de connexion (9) agencé pour coopérer avec un socle de connexion (8) formé dans une cuvette (2) de réception du rouleau de papier (3).

3. Télécopieur selon la revendication 2, dans lequel l'embout de connexion (9) sert de butée au rouleau de papier (3).

4. Télécopieur selon l'une des revendications 2 et 3, dans lequel la batterie (10, 12) repose sur un berceau (7) ménagé dans un flasque latéral (6) de la cuvette (2).
